# EUROPEAN PATENT APPLICATION

(11) **EP 4 239 713 A1**
(43) Date of publication of application: **06.09.2023**
(21) Application number: 21886331.4
(22) Date of filing: 28.10.2021
(51) Int. Cl.: H01M 4/131, H01M 4/525, H01M 4/62, H01M 10/052, H01M 10/0566

(54) **POSITIVE ELECTRODE FOR SECONDARY BATTERY, AND SECONDARY BATTERY**

(30) Priority: 30.10.2020 JP 2020183245
(71) Applicant: Panasonic Intellectual Property Management Co., Ltd., Kadoma-shi, Osaka 571-0057 (JP)
(72) Inventor: UKA Youichirou, Kadoma-shi, Osaka 571-0057 (JP); YOSHINARI Rina, Kadoma-shi, Osaka 571-0057 (JP)
(74) Representative: Novagraaf International SA
(86) International application number: PCT/JP2021/039848
(87) International publication number: WO 2022/092214

(57) **Abstract**

A positive electrode for a secondary battery includes a positive electrode current collector, and a positive electrode mixture layer including a positive electrode active material and provided on a surface of the positive electrode current collector, wherein the positive electrode active material includes a lithium-containing composite oxide having a layered structure, and in which 80 atom % or more of metal other than lithium is nickel, the positive electrode mixture layer includes a conductive additive containing carbon at a ratio of 1 part by mass or less relative to 100 parts by mass of the positive electrode active material, the positive electrode mixture layer has a material resistance Rm of 30 Ω·cm or less, and a ratio Rm/Rc of the material resistance Rm (Ω·cm) of the positive electrode mixture layer relative to an interface resistance Rc (Ω·cm²) between the positive electrode current collector and the positive electrode mixture layer is 200 or more.

## Description

### TECHNICAL FIELD

The present disclosure relates to a secondary battery, particularly to an improvement in a positive electrode used for a secondary battery.

### BACKGROUND ART

Secondary batteries, particularly lithium ion secondary batteries, are expected as a power source for small consumer applications, power storage devices, and electric vehicles, because of their high output and high energy density. For positive electrode active materials of lithium ion secondary batteries, a composite oxide of lithium and a transition metal (e.g., cobalt) is used. A high capacity can be achieved by replacing a portion of cobalt with nickel.

Furthermore, recently, to increase the energy density and durability of lithium ion batteries, a positive electrode active material with a high charge/discharge capacity is used in positive electrodes, with an amount of the positive electrode active material per unit area increased by compressing the positive electrode active material mounted in a large amount.

Patent Literature 1 has proposed using composite oxide particles having a compressive strength of 250 MPa or more in a non-coagulated state for a positive electrode active material in a non-aqueous electrolyte secondary battery. This allows for suppression in reduction of the capacity retention rate in charge/discharge cycles and increase in resistance, despite using a positive electrode active material including composite oxide particles including Ni, Co, and Li, and at least one of Mn and Al, and having a Ni ratio of 50 mol % or more relative to a total molarity of the metal element excluding Li.

Patent Literature 2 has proposed a lithium ion secondary battery in which a lithium nickel composite oxide represented by Li_{y}Ni₍₁₋ₓ₎Mₓ and carbon nanotube are included in the positive electrode, and the ratio a/b of the average value "a" of carbon nanotube length relative to the average particle size "b" of primary particles of the lithium nickel composite oxide is 0.5 or more.

### Citation List

### Patent Document

Patent Literature 1 : WO 2019/026629
Patent Literature 2 : WO 2008/051667

### SUMMARY OF THE INVENTION

### PROBLEM TO BE SOLVED BY THE INVENTION

Recently, a lithium ion secondary battery with both a high energy density and durability at a higher level has been in demand.

However, when using a lithium-transition metal composite oxide including Ni in the positive electrode active material to achieve a high capacity, the higher the Ni ratio in the lithium-transition metal composite oxide is, the more the Li is excessively taken out from the positive electrode active material and causes the surface of the positive electrode active material to be reformed, which may change the structure to a structure that is difficult for storage and release of Li ions. As a result, movement of lithium ions is hindered, and reduction in cycle characteristics tends to occur.

### MEANS FOR SOLVING THE PROBLEM

In view of the above, an aspect of the present disclosure relates to a positive electrode for a secondary battery including a positive electrode current collector, and a positive electrode mixture layer including the positive electrode active material and provided on a surface of the positive electrode current collector, wherein the positive electrode active material has a layered structure, and includes a lithium-containing composite oxide in which 80 atom % or more of metal other than lithium is nickel, the positive electrode mixture layer includes a conductive additive containing carbon at a ratio of 1 part by mass or less relative to 100 parts by mass of the positive electrode active material, the positive electrode mixture layer has a material resistance Rm of 30 Ω·cm or less, and a ratio of the material resistance Rm (Ω·cm) of the positive electrode mixture layer relative to an interface resistance Rc (Ω·cm²) between the positive electrode current collector and the positive electrode mixture layer Rm/Rc is 200 or more.

Another aspect of the present disclosure relates to a secondary battery including the above-described positive electrode for a secondary battery, a separator, a negative electrode facing the positive electrode for a secondary battery with the separator interposed therebetween, and an electrolyte.

### EFFECTS OF THE INVENTION

The present disclosure realizes a secondary battery with both a high energy density and excellent cycle characteristics.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

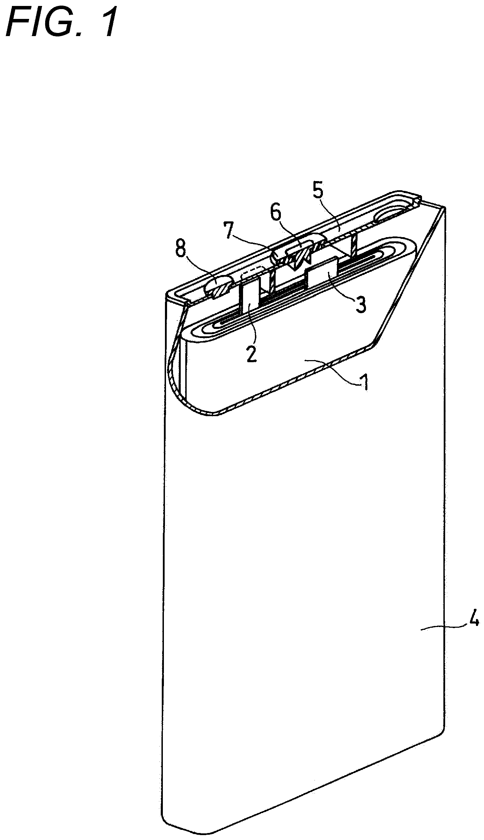

[FIG. 1] FIG. 1 is a partially cutaway schematic perspective view of a secondary battery of an embodiment of the present disclosure.

### DESCRIPTION OF THE EMBODIMENTS

A positive electrode for a secondary battery of the embodiment of the present disclosure includes a positive electrode current collector, and a positive electrode mixture layer containing a positive electrode active material and provided on a surface of the positive electrode current collector. The positive electrode active material includes a lithium-containing composite oxide having a layered structure, and in the lithium-containing composite oxide, 80 atom % or more of metal atoms other than lithium is nickel. The positive electrode mixture layer includes a conductive additive containing carbon at a ratio of 1 part by mass or less relative to 100 parts by mass of the positive electrode active material. The positive electrode mixture layer has a material resistance Rm of 30 Ω·cm or less. The positive electrode mixture layer has a ratio of a material resistance Rm (Ω·cm) relative to an interface resistance Rc (Ω·cm²) between the positive electrode current collector and the positive electrode mixture layer Rm/Rc of 200 or more.

The material resistance Rm means a resistivity (Ω·cm) of the positive electrode mixture including the positive electrode active material, conductive additive, etc. The interface resistance Rc means a resistivity (Ω·cm²) per a unit area 1 cm² of the interface between the positive electrode mixture and the core (current collector) material.

Generally, the positive electrode mixture is formed by preparing a slurry including materials such as a positive electrode active material, conductive additive, binder, solvent, and the like, applying it to the core such as metal foil, and drying. In this process of drying, the solvent moves out of the mixture by volatilization, and therefore the material of the conductive additive or the like also moves from near the core along with this movement. Therefore, it is considered that by decreasing the possibility of presence near the core of the conductive additive, the interface resistance Rc also increases. The phenomenon of the movement of the conductive additive from near the core signifies that the conductive additive inside the positive electrode mixture is distributed locally. The local distribution of the conductive additive results in a hindrance to the movement of lithium ions, and to the electron conduction between the positive electrode active material particles, and generates nonhomogeneous charge/discharge reactions in the end. Particularly when a high Ni positive electrode active material is used, a high charge/discharge capacity and improvement in battery capacity can be expected, but instead the crystal structure is destabilized by releasing a great amount of lithium ions and is reformed particularly at an interface with the electrolyte, which may cause deterioration of charge/discharge performance. Also, as a conductive additive with a high electron conductivity, carbon nanotube, graphene, and a small particle size carbon black are generally used. However, these nanocarbons have a small particle structure, and therefore the steric hindrance between molecules is small, and tend to move from near the core during drying of the positive electrode mixture, and tends to distribute locally. Thus, the smaller the interface resistance Rc and material resistance Rm of the positive electrode active material layer are, the more the potential variations between the positive electrode active material particles can be reduced, and nonhomogeneous charge/discharge reactions can be suppressed. Thus, excessive progression of charge/discharge reaction in a partial region of the positive electrode mixture layer is suppressed, and reformation of the positive electrode active material surface is suppressed. As a result, reduction in cycle characteristics is suppressed.

Cycle characteristics depend on the material resistance Rm of the positive electrode mixture layer, and also the interface resistance Rc between the positive electrode current collector and the positive electrode mixture layer. Preferably, lower Rm and Rc can suppress reduction in cycle characteristics. Generally, to lower Rm and Rc, the amount of the conductive additive contained can be increased. However, the increase in the amount of the conductive additive contained reduces the amount of the positive electrode active material included in the mixture layer, and makes it difficult to obtain a high capacity. Preferably, to keep a high capacity, the amount of the conductive additive contained is 1 part by mass or less relative to 100 parts by mass of the positive electrode active material. Meanwhile, setting the amount of the conductive additive contained to 1 part by mass or less relative to 100 parts by mass of the positive electrode active material increases Rm and Rc, and the cycle characteristics may not be kept high.

With a positive electrode for a secondary battery of this embodiment, by setting the material resistance Rm of the positive electrode mixture layer to a low value of 30Ω·cm or less, or even to 20Ω·cm or less, and setting Rm/Rc to 200 or more, cycle characteristics can be improved significantly even when the amount of the conductive additive contained is 1 part by mass or less relative to 100 parts by mass of the positive electrode active material and the nickel ratio in the lithium-containing composite oxide is set to 80% or more.

With a positive electrode for a secondary battery in which a lithium-containing composite oxide containing nickel is used, when Rm is 30Ω·cm or less and Rm/Rc is 200 or more, sufficiently high cycle characteristics can be kept. More preferably, Rm/Rc is 500 or more. In this case, even more excellent cycle characteristics can be achieved. Rm/Rc may be 1000 or less, or 800 or less. The upper limit and the lower limit of the above-described Rm/Rc can be combined arbitrarily.

The material resistance Rm of the positive electrode mixture layer, and the interface resistance Rc between the positive electrode current collector and the positive electrode mixture layer can be measured simultaneously by using, for example, an electrode resistance measurement system RM2610 manufactured by HIOKI E.E. CORPORATION. In a surface of the positive electrode mixture layer, Rm and Rc are measured at plural positions (e.g., 10 points or more) sufficiently distant from each other, and they are averaged. Other methods can be used as long as equivalent measurement results can be obtained.

The material resistance Rm of the positive electrode mixture layer, and the interface resistance Rc between the positive electrode current collector and the positive electrode mixture layer can be controlled by, for example, changing material, characteristics (particle size or fiber diameter, fiber length, etc.) and the amount contained of the conductive additive, and conditions when drying the mixture slurry, the pressure when rolling the positive electrode mixture layer, etc. Using a carbon fiber with a long fiber length, the positive electrode mixture layer and the positive electrode current collector can make face contact, which easily reduces the interface resistance Rc.

The conductive additive including carbon is added to the positive electrode mixture layer as a conductive agent to form a conductive path between the positive electrode active material particles, and increase the electrical conductivity of the positive electrode mixture layer. The conductive additive including carbon may be electrically conductive carbon particles such as carbon black, or electrically conductive carbon fiber such as carbon nanotube. Preferably, the conductive additive including carbon includes carbon nanotube. Carbon nanotube may be 80 mass% or more of the carbon fiber. Carbon nanotube is a small carbon fiber having a fiber diameter of nano-order, and by including the carbon fiber having a small fiber diameter in the positive electrode mixture layer, the resistance can be reduced even with a small amount. Also, deterioration in liquid flowability is suppressed, and even when a lithium-containing metal oxide having a Ni ratio of 0.8 or more is used for the positive electrode active material, excellent cycle characteristics can be maintained.

The carbon nanotube may have a fiber length of 1 µm or more. In this case, the aspect ratio (ratio of fiber length relative to outer diameter) of carbon nanotube, i.e., carbon fiber, is quite high. Such a carbon fiber having a high aspect ratio contacts the active material and the current collector, not with a point contact, but with a line contact. The carbon fiber with excellent electrical conductivity is present between the positive electrode active material particles and forms line contact portions with the particles, thereby potential variations among the positive electrode active material particles can be reduced, and nonhomogeneous charge/discharge reactions can be suppressed. Also, the carbon fiber with excellent electrical conductivity forms line conductive paths between the positive electrode active material particles and the current collector, and forms line contact portions with the current collector, thereby the interface resistance Rc is greatly reduced. Furthermore, by allowing the carbon fiber to be present locally at the current collector side when forming the positive electrode mixture layer, the interface resistance Rc can be further reduced. Meanwhile, the carbon fiber with a large aspect ratio occupies a small volume in the positive electrode mixture layer, and therefore reduction in liquid flowability is suppressed, even when the carbon fiber is present in the gaps between the positive electrode active material particles that are supposed to be filled with the electrolyte. Also, being fibrous, even when the positive electrode active material is densely packed in the positive electrode mixture layer, the gaps for the electrolyte can be easily secured. As a result, reduction in cycle characteristics can be significantly suppressed.

Also, the above-described carbon fiber only occupies a small volume in the positive electrode mixture layer, and therefore the space occupied by the positive electrode mixture layer excluding the carbon fiber can be mostly made up of the positive electrode active material. Thus, by increasing the positive electrode mixture layer thickness, and/or increasing the amount of the positive electrode active material per positive electrode area by compression, a high capacity positive electrode can be easily obtained.

The amount of carbon fiber contained may be 1 part by mass or less relative to 100 parts by mass of the positive electrode active material. The amount of carbon fiber contained may be 0.01 parts by mass or more and 1 part by mass or less, or 0.02 parts by mass or more and 0.5 parts by mass or less relative to 100 parts by mass of the positive electrode active material. The above-described carbon fiber content is a value based on the mass of the positive electrode active material in a discharged state.

The fiber length of the carbon fiber or carbon nanotube means an average fiber length, and can be determined by image analysis using a scanning electron microscope (SEM). The average fiber length of the carbon fiber or carbon nanotube can be determined by, for example, randomly selecting a plurality of (e.g., 100 to 1000) carbon fibers or carbon nanotubes, measuring their length and diameter, and averaging them. The fiber length means a length in a linear state.

The carbon fiber or carbon nanotube has a fiber diameter (outer diameter) of, for example, 20 nm or less, or may be 15 nm or less. The fiber diameter of the carbon fiber or carbon nanotube means an average fiber diameter, and can be determined by image analysis using a scanning electron microscope (SEM). The average fiber diameter of the carbon fiber or carbon nanotube can be determined by, for example, randomly selecting a plurality of (e.g., 100 to 1000) carbon fibers or carbon nanotubes, measuring their fiber diameter, and averaging them. The fiber diameter means a length in a direction perpendicular to the fiber length direction.

The content of the positive electrode active material in the positive electrode mixture layer can be determined from a mixture sample obtained by disassembling a secondary battery in a discharged state, washing the obtained positive electrode with an organic solvent, drying under vacuum, and removing only the mixture layer. By performing thermal analysis such as TG-DTA and the like on the mixture sample, the ratio of the binder component and the conductive agent component, other than the positive electrode active material can be calculated. When the binder component and the conductive agent component contain several types of carbon materials, the ratio of the carbon fiber therein can be calculated by performing microscopic Raman spectroscopy on the cross sections of the positive electrode mixture layer.

Carbon nanotubes may be single-walled, double-walled, or multi-walled, but preferably, carbon nanotubes with a fiber diameter of 20 nm or less are used in view of achieving great effects with a small amount. Preferably, carbon nanotubes have a fiber length of 1 µm or more, in view of securing electron conductivity inside the positive electrode. Meanwhile, there is no upper limit for the fiber length if they are appropriately arranged inside the positive electrode, and generally, in view of the particle size of the positive electrode active material being 1 µm or more and 20 µm or less, an appropriate length can be about the same. That is, the carbon nanotube has a fiber length of, for example, 1 µm or more and 20 µm or less.

For the conductive additive, carbon fiber other than carbon nanotube and/or electrically conductive carbon particles can be mixed with carbon nanotube and used. The carbon fiber other than carbon nanotube has a fiber length of preferably 1 µm or more, and may be, for example, 1 µm or more and 20 µm or less. For example, when a plural number of (e.g., 100 or more) carbon fiber is randomly selected in the positive electrode mixture layer, 50% or more of the carbon fiber may have a fiber length of 1 µm or more, or 1 µm or more and 20 µm or less. 80% or more of the carbon fiber may have a fiber length of 1 µm or more, or 1 µm or more and 20 µm or less.

To obtain a high capacity, the load amount (application amount) per unit area of the positive electrode mixture layer provided on the surface of the positive electrode current collector may be 250 g/m² or more. With this embodiment, even when the amount of the positive electrode mixture and the amount of the positive electrode active material are increased, excellent cycle characteristics can be achieved.

For the positive electrode active material, to achieve a high capacity, 85 atom % or more of the metal other than lithium in the above-described lithium-containing composite oxide can be nickel. With this embodiment, even when the Ni ratio of the positive electrode active material is increased, excellent cycle characteristics can be achieved.

Next, a secondary battery of the embodiment of the present disclosure is described. The secondary battery includes, for example, the following positive electrode, a negative electrode, an electrolyte, and a separator.

### [Positive electrode]

The positive electrode has a positive electrode current collector and a positive electrode mixture layer formed on a surface of the positive electrode current collector and having a positive electrode active material. For the positive electrode, the above-described positive electrode for a secondary battery is used. The positive electrode mixture layer can be formed by applying a positive electrode slurry in which a positive electrode mixture containing a positive electrode active material, a binder, and the like is dispersed in a dispersion medium on a surface of a positive electrode current collector and drying the slurry. The dried coating film may be rolled, if necessary. The positive electrode mixture layer may be formed on one surface of the positive electrode current collector, or may be formed on both surfaces thereof.

The positive electrode mixture layer includes a positive electrode active material, and a conductive additive including carbon as essential components. Examples of the conductive additive including carbon include the above-described material (e.g., carbon nanotube). The conductive additive containing carbon is included by a ratio of 1 part by mass or less relative to 100 parts by mass of the positive electrode active material in the positive electrode mixture layer. Another conductive additive that is different from the conductive additive including carbon can be included in the positive electrode mixture layer. The positive electrode mixture layer can contain, as optional components, a binder, a thickener, and the like. For the binder, thickener, and another conductive additive, known materials can be used.

For the positive electrode active material, a lithium-containing composite oxide having a layered structure (e.g., rock salt type crystal structure) containing lithium and a transition metal can be used. To be specific, the lithium-containing composite oxide is a lithium-nickel composite oxide represented by, for example, LiₐNiₓM₁₋ₓO₂ (where 0 < a ≤ 1.2, 0.8 ≤ x ≤ 1, M is at least one selected from the group consisting of Co, Al, Mn, Fe, Ti, Sr, Na, Mg, Ca, Sc, Y, Cu, Zn, Cr, and B). Preferably, M includes at least one selected from the group consisting of Co, Mn, Al, and Fe. From the viewpoint of stabilities of the crystal structure, Al may be contained as M. Note that the value "a" indicating the molar ratio of lithium is increased or decreased by charging and discharging. For a specific example of such a composite oxide, a lithium-nickel-cobalt-aluminum composite oxide (LiNi_{0.9}Co_{0.05}Al_{0.05}O₂, etc.) is used.

In view of achieving a high capacity, the ratio of Ni in the metal element other than Li included in the lithium transition metal composite oxide is preferably 80 atom % or more. The Ni ratio in the metal element other than Li may be 85 atom % or more, or 90 atom % or more. The Ni ratio in the metal element other than Li is, for example, preferably 95 atom % or less. When the range is to be limited, these upper and lower limits can be combined arbitrarily.

In the following, the lithium transition metal composite oxide which has a layered rock salt type structure, and includes Ni and at least one selected from the group consisting of Co, Mn, Fe, and Al wherein the Ni ratio in the metal element other than Li is 80 atom % or more is also referred to as "composite oxide HN". Li ions can be reversibly inserted to and desorbed from interlayers of the layered rock salt type structure of the composite oxide HN.

Co, Mn, and Al contribute to stabilization of the crystal structure of the composite oxide HN with a high Ni content. However, in view of reduction in production costs, the Co content is preferably small. The composite oxide HN with a small Co content or not containing Co may include Mn and Al.

The ratio of Co in the metal element other than Li is preferably 20 atom % or less, more preferably 10 atom % or less or 5 atom % or less, and Co does not have to be included. In view of stabilizing the crystal structure of the composite oxide HN, 1 atom % or more, or 1.5 atom % or more Ni is preferably included.

The ratio of Mn in the metal element other than Li may be 10 atom % or less, or 5 atom % or less. The ratio of Mn in the metal element other than Li may be 1 atom % or more, 3 atom % or more, or 5 atom % or more. When the range is to be limited, these upper and lower limits can be combined arbitrarily.

The ratio of Al in the metal element other than Li may be 10 atom % or less, or 5 atom % or less. The ratio of Al in the metal element other than Li may be 1 atom % or more, 3 atom % or more, or 5 atom % or more. When the range is to be limited, these upper and lower limits can be combined arbitrarily.

The composite oxide HN is represented by, for example, a formula: Li_{α}Ni_{(1-x1-x2-y-z)} Coₓ₁Mnₓ₂Al_{y}M_{z}O_{2+β}. Element M is an element other than Li, Ni, Co, Mn, Fe, Al, and oxygen.

In the above-described formula, α representing the atomic ratio of lithium is, for example, 0.95 ≤ α ≤ 1.05. However, α is a value in a completely discharged state. In (2+β) representing the atomic ratio of oxygen, β satisfies -0.05 ≤ β ≤ 0.05.

1-x1-x2-y-z (= x) representing the atomic ratio of Ni is 0.8 or more, may be 0.85 or more, 0.9 or more, 0.92 or more or 0.95 or more. x representing the atomic ratio of Ni may be 0.98 or less, or 0.95 or less. When the range is to be limited, these upper and lower limits can be combined arbitrarily.

x1 representing the atomic ratio of Co is, for example, 0.1 or less (0 ≤ x1 ≤ 0.1), may be 0.08 or less, 0.05 or less, or 0.01 or less. When x1 is 0, it includes a case where Co is contained under a detection limit.

x2 representing the atomic ratio of Mn is, for example, 0.1 or less (0 ≤ x2 ≤ 0.1), 0.08 or less, 0.05 or less, or 0.03 or less. x2 may be 0.01 or more, or 0.03 or more. Mn contributes to stabilization of the crystal structure of the composite oxide HN, and by including low cost Mn in the composite oxide HN, it is advantageous in reduction of costs. When the range is to be limited, these upper and lower limits can be combined arbitrarily.

y representing the atomic ratio of Al is, for example, 0.1 or less (0 ≤ y ≤ 0.1), may be 0.08 or less, 0.05 or less, or 0.03 or less. y may be 0.01 or more, or 0.03 or more. Al contributes to stabilization of the crystal structure of the composite oxide HN. When the range is to be limited, these upper and lower limits can be combined arbitrarily.

z representing the atomic ratio of element M is, for example, 0 ≤ z ≤ 0.10, may be 0 < z ≤ 0.05, or 0.001 ≤ z ≤ 0.01. When the range is to be limited, these upper and lower limits can be combined arbitrarily.

Element M may be at least one selected from the group consisting of Ti, Zr, Nb, Mo, W, Zn, B, Si, Mg, Ca, Sr, Sc, and Y. In particular, when at least one selected from the group consisting of Nb, Sr, and Ca is included in the composite oxide HN, it is assumed that the surface structure of the composite oxide HN stabilizes and the resistance decreases, and elution of metal is further suppressed. The element M present locally near the surface of the composite oxide HN particles is more effective.

The amount of element contained in the composite oxide HN can be measured by, for example, an inductively coupled atomic emission spectroscopy (ICP-AES), an electron probe micro analyzer (EPMA), or energy-dispersive X-ray spectroscopy (EDX).

The composite oxide HN is, for example, secondary particles of coagulated plurality of primary particles. The primary particles have a particle size of, for example, 0.05 µm or more and 1 µm or less. The secondary particles of the composite oxide HN have an average particle size of, for example, 3 µm or more and 30 µm or less, or may be 5 µm or more and 25 µm or less.

In this specification, the average particle size of the secondary particles means a particle size (volume average particle size) at which cumulative volume is 50% in the particle size distribution measured by the laser diffraction scattering method. Such a particle size may be referred to as D50. For example, "LA-750" manufactured by Horiba Corporation can be used as the measuring device.

The positive electrode active material may include a lithium transition metal composite oxide other than the composite oxide HN, but preferably, the ratio of the composite oxide HN is high. The ratio of the composite oxide HN in the positive electrode active material is, for example, 90 mass% or more, may be 95 mass% or more, or 100%.

In the above-described lithium-nickel composite oxide, with the Ni ratio of x being higher, more lithium ions can be taken out from the lithium-nickel composite oxide during charging, which allows for higher capacity. However, in the lithium-nickel composite oxide having a high capacity in this manner, the valency of Ni tends to be high. As a result, the crystal structure tend to be unstable particularly at a fully charged state, and during repetitive charge/discharge, the crystal structure of the active material particle surface may change (be inactivated) to a structure by which reversible storage and release of lithium ions is difficult. As a result, cycle characteristics tend to be deteriorated. In particular, when a configuration is used in which the positive electrode mixture layer has a large thickness and/or the positive electrode active material amount per unit area is increased by compressing the mixture layer, the flow of lithium ions and/or electrons tends to be inhibited during charge/discharge reactions, which may cause inhomogeneous charge/discharge reactions. When an inhomogeneous charge/discharge reaction occurs, inactivation of the crystal structure progresses in a portion of the region where charge reactions excessively progressed and a large amount of lithium ions are taken, and cycle characteristics may be reduced.

However, with the positive electrode for a secondary battery of this embodiment, by setting the material resistance Rm of the positive electrode mixture layer to 30Ω·cm or less, and setting the ratio Rm/Rc of Rm relative to the interface resistance Rc between the positive electrode current collector and the positive electrode mixture layer to 200 or more, even when a lithium-containing composite oxide with a high Ni ratio x is used, cycle characteristics can be kept high. Thus, a secondary battery with excellent cycle characteristics and a high energy density can be achieved.

The shape and thickness of the positive electrode current collector can be selected from the shapes and ranges according to the negative electrode current collector. Examples of the material of the positive electrode current collector may be stainless steel, aluminum, aluminum alloy, and titanium.

### [Negative electrode]

The negative electrode includes a negative electrode active material. The negative electrode generally includes a negative electrode current collector, a layered negative electrode mixture (hereinafter, referred to as negative electrode mixture layer) supported on the negative electrode current collector. The negative electrode mixture layer can be formed, for example, by applying a negative electrode slurry, in which components of a negative electrode mixture are dispersed in a dispersion medium, on a surface of the negative electrode current collector and drying. The dried coating film may be rolled, if necessary.

The negative electrode mixture may include, as an essential component, a negative electrode active material, and as optional components, a binder, thickener, conductive agent, and the like.

### (Negative electrode active material)

For the negative electrode active material, a metal lithium, or a lithium alloy may be used, but a material that is capable of electrochemically storing and releasing lithium ions is suitably used. Examples of such a material include a carbon material and a Si-containing material. The negative electrode may include one type of negative electrode active material, or two or more types can be used in combination.

Examples of the carbon material include graphite, graphitizable carbon (soft carbon), and non-graphitizable carbon (hard carbon). A kind of carbon material may be used singly, or two or more kinds thereof may be used in combination. Preferred among them is graphite, which is excellent in stability during charging and discharging and has a small irreversible capacity. Graphite includes, for example, natural graphite, artificial graphite, graphitized mesophase carbon particles, and the like.

Examples of the Si-containing material include Si simple element, silicon alloy, silicon compound (silicon oxide, etc.), and a composite material in which a silicon phase is dispersed in a lithium ion conductive phase (matrix). Examples of the silicon oxide include SiOₓ particles. x is, for example, 0.5 ≤ x < 2, or may be 0.8 ≤ x ≤ 1.6. Examples of the lithium ion conductive phase include at least one selected from the group consisting of a SiO₂ phase, silicate phase, and carbon phase.

For the binder, thickener, and conductive agent, and dispersion medium used for the negative electrode slurry, for example, those materials exemplified for the positive electrode can be used.

For the negative electrode current collector, for example, metal foil may be used. The negative electrode current collector may be porous. For the material of the negative electrode current collector, stainless steel, nickel, nickel alloy, copper, copper alloy or the like can be exemplified. The negative electrode current collector has a thickness of, for example, 1 to 50 µm, or may be 5 to 30 µm, without particular limitation.

### [Electrolyte]

The electrolyte includes a solvent and a solute dissolved in the solvent. The solute is an electrolytic salt that goes through ion dissociation in electrolytes. The solute may include, for example, a lithium salt. The component of the electrolyte other than the solvent and solute is additives. The electrolyte may contain various additives.

For the solvent, known materials can be used. For the non-aqueous solvent, for example, cyclic carbonic acid esters, chain carbonic acid esters, cyclic carboxylic acid esters, chain carboxylic acid esters, and the like are used. Examples of the cyclic carbonic acid esters include propylene carbonate (PC), ethylene carbonate (EC), fluoro ethylene carbonate (FEC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include non-aqueous solvents such as methyl acetate, ethyl acetate, propyl acetate, methyl propionate (MP), and ethyl propionate (EP). A kind of non-aqueous solvent may be used singly, or two or more kinds thereof may be used in combination.

Examples of the lithium salt include a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN (C₂F₅SO₂)₂, etc.), a lithium halide (LiCl, LiBr, LiI, etc.) and the like. A kind of lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less. By adjusting the lithium salt concentration within the above-described range, an electrolyte with excellent ion conductivity and suitable viscosity can be produced. However, the lithium salt concentration is not limited to the above-described concentration.

The electrolyte may contain other known additives. Examples of the additive include 1,3-propanesultone, methylbenzenesulfonate, cyclohexylbenzene, biphenyl, diphenyl ether, and fluorobenzene.

### [Separator]

A separator is interposed between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin, such as polypropylene and polyethylene.

In an example structure of the non-aqueous electrolyte secondary battery, an electrode group and a non-aqueous electrolyte are accommodated in an outer package, and the electrode group has a positive electrode and a negative electrode wound with a separator interposed therebetween. However, the structure is not limited thereto, and other forms of electrode groups may be used. For example, it can be a laminate electrode group, in which a positive electrode and a negative electrode are laminated with a separator interposed therebetween. The non-aqueous electrolyte secondary batteries may be of any form, for example, a cylindrical type, prismatic type, coin type, button type, laminated type, etc.

FIG. 1 is a partially cutaway schematic perspective view of a prismatic non-aqueous electrolyte secondary battery in an embodiment of the present disclosure. The battery includes a bottomed prismatic battery case 4, an electrode group 1 and a non-aqueous electrolyte (not shown) accommodated in the battery case 4. The electrode group 1 has a negative electrode in the form of a long strip, a positive electrode in the form of a long strip, and a separator interposed therebetween. The negative electrode current collector of the negative electrode is electrically connected to the negative electrode terminal 6 provided in a sealing plate 5 with the negative electrode lead 3. The negative electrode terminal 6 is insulated from the sealing plate 5 with a resin gasket 7. The positive electrode current collector of the positive electrode is electrically connected to a rear face of the sealing plate 5 through the positive electrode lead 2. That is, the positive electrode is electrically connected to a battery case 4 also serving as a positive electrode terminal. The periphery of the sealing plate 5 is fitted to the open end of the battery case 4, and the fitting portion is laser welded. An injection hole for the non-aqueous electrolyte is provided in the sealing plate 5 and is plugged with a sealing plug 8.

Hereinafter, the present disclosure will be specifically described based on Examples and Comparative Examples, but the present disclosure is not limited to the following Examples.

### < Examples 1 to 7, Comparative Examples 1 to 4 >

### [Negative electrode production]

A silicon composite material and graphite were mixed at a mass ratio of 5:95, and used as a negative electrode active material. The negative electrode active material, sodium carboxy methylcellulose (CMC-Na), styrene-butadiene rubber (SBR), and water were mixed at a predetermined mass ratio to prepare a negative electrode slurry. Next, the negative electrode slurry was applied to a surface of copper foil as the negative electrode current collector, and the coating was dried and then rolled to form negative electrode mixture layers on both surfaces of the copper foil.

### [Positive electrode production]

For the positive electrode active material, the lithium-containing composite oxide shown in Table 1 was used. The positive electrode active material, conductive additive shown in Table 1, polyvinylidene fluoride, N-methyl-2-pyrrolidone (NMP) were mixed at a predetermined mass ratio to prepare a positive electrode slurry. Next, the positive electrode slurry was applied to the surface of aluminum foil as a positive electrode current collector, and the coating film was dried, and then rolled to form a positive electrode mixture layer on both surfaces of the aluminum foil.

### [Electrolyte preparation]

To a mixed solvent containing ethylene carbonate (EC) and ethyl methyl carbonate (EMC) in a volume ratio of 3 :7, LiPF₆ was added as a lithium salt to prepare an electrolyte. The non-aqueous electrolyte had a LiPF₆ concentration of 1.0 mol/liter.

### [Secondary battery production]

A lead tab was attached to each of the positive electrode and negative electrode, and an electrode group was produced by winding the positive electrode and negative electrode in a spiral shape with a separator interposed so that the leads were positioned at the outermost peripheral portion. The electrode group was inserted into an outer case made of a laminate film having aluminum foil as a barrier layer, and dried under vacuum at 105°C for 2 hours, and afterwards, the non-aqueous electrolyte was injected, the opening of the outer case was sealed, thereby producing a secondary battery.

Table 1 shows the composition of the lithium-containing composite oxide used as the positive electrode active material, the conductive additive and the amount added (parts by mass relative to 100 parts by mass of positive electrode active material), the amount of the positive electrode mixture layer applied per unit area, and Rm and Rm/Rc values, in Examples 1 to 7, and Comparative Examples 1 to 4. In Table 1, the batteries A1 to A7 correspond to Examples 1 to 7, and the batteries B1 to B4 correspond to Comparative Examples 1 to 4, respectively. The Rm and Rm/Rc values shown in Table 1 are the values obtained by charging/discharging the above-described secondary battery only once, disassembling the discharged battery, and washing the positive electrode taken out with dimethyl carbonate, and measuring after vacuum drying.

In Table 1, CB under the column of conductive additive represents carbon black (acetylene black, average particle size about 20 nm). Also, in Table 1, CNT under the column of conductive additive represents carbon nanotube. The carbon nanotube has an average diameter of about 10 nm, and the average fiber length is as shown in Table 1.

### [Evaluation]

### (Initial charge/discharge)

The batteries obtained above were subjected to constant current charging until the voltage reached 4.2 V at a current of 0.5 It, and thereafter, subjected to constant voltage charging at a constant voltage of 4.2 V until the current reached 0.02 It in an environment of 25°C. Thereafter, constant current discharging was carried out until the voltage was 2.5 V at a current of 1.0 It, and the initial discharge capacity C₀ was determined. Charging and discharging were performed in an environment of 25°C.

### (Durability)

Setting the pausing period between charging and discharging to 10 minutes, charging and discharging were repeated 100 cycles with the above charging and discharging conditions in an environment of 25°C, to determine the discharge capacity C₁ at 100th cycle. The ratio R₁ of the discharge capacity C₁ to the initial discharge capacity C₀, R₁=C₁/C₀ was evaluated as the capacity retention rate, and R₁ × 100 was regarded as an index representing durability.

Table 1 shows evaluation results of durability of the batteries A1 to A7 and B1 to B4. Table 1 shows that when the material resistance Rm of the positive electrode mixture layer is 30Ω·cm or less (even 20Ω·cm or less), and the Rm/Rc is 200 or more, excellent durability can be achieved. In particular, the battery in which 1 part by mass or less of carbon nanotube was added as the conductive additive had low Rm and Rm/Rc, and excellent durability.

**[Table 1]**

| | Positive electrode mixture layer | | | | | Rm | Rm/Rc | Durability |
|---|---|---|---|---|---|---|---|---|
| | Positive Electrode Active Material Composition | Conductive additive | | | Application amount (g/m²) | | | |
| | | Type | Fiber length (µm) | Amount added | | | | |
| A1 | LiNi_{0.88}Co_{0.10}Al_{0.02}O₂ | CB | 1.0 | 1% | 250 | 19.2 | 651 | 91.2 |
| A2 | LiNi_{0.88}Co_{0.10}Al_{0.02}O₂ | CNT | 1.1 | 0.5% | 250 | 14.5 | 676 | 93.6 |
| A3 | LiNi_{0.88}Co_{0.10}Al_{0.02}O₂ | CNT | 1.6 | 0.5% | 250 | 13.2 | 702 | 90.5 |
| A4 | LiNi_{0.88}Co_{0.10}Al_{0.02}O₂ | CNT | 1.6 | 0.5% | 250 | 13.2 | 756 | 91.1 |
| A5 | LiNi_{0.90}Co_{0.05}Al_{0.05}O₂ | CNT | 1.6 | 0.5% | 300 | 14.6 | 683 | 90.9 |
| A6 | LiNi_{0.88}Co_{0.10}Al_{0.02}O₂ | CNT | 0.8 | 0.6% | 250 | 12.7 | 411 | 89.4 |
| A7 | LiNi_{0.88}Co_{0.10}Al_{0.02}O₂ | CB | 0.8 | 0.9% | 250 | 19.5 | 218 | 87.3 |
| B1 | LiNi_{0.88}Co_{0.10}Al_{0.02}O₂ | CB | 0.2 | 0.8% | 250 | 33.3 | 348 | 84.6 |
| B2 | LiNi_{0.88}Co_{0.10}Al_{0.02}O₂ | CNT | 1.5 | 0.5% | 250 | 15.1 | 102 | 84.1 |
| B3 | LiNi_{0.88}Co_{0.10}Al_{0.02}O₂ | CNT | 0.8 | 0.5% | 250 | 16.7 | 62 | 85.5 |
| B4 | LiNi_{0.88}Co_{0.10}Al_{0.02}O₂ | CNT | 0.8 | 0.5% | 300 | 17.3 | 55 | 83.6 |

### Industrial Applicability

With the secondary battery of the present disclosure, a secondary battery with a high capacity and also with excellent cycle characteristics can be provided. The secondary battery according to the present disclosure is useful for a main power source of a mobile communication device, a portable electronic device, or the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### Description of Reference Numerals

1: electrode group, 2: positive electrode lead, 3: negative electrode lead, 4: battery case, 5: sealing plate, 6: negative electrode terminal, 7: gasket, 8: sealing plug

## Claims

1. A positive electrode for a secondary battery, comprising: a positive electrode current collector, and a positive electrode mixture layer including a positive electrode active material and provided on a surface of the positive electrode current collector, wherein
the positive electrode active material includes a lithium-containing composite oxide having a layered structure, where 80 atom % or more of metal other than lithium is nickel,
the positive electrode mixture layer includes a conductive additive containing carbon at a ratio of 1 part by mass or less relative to 100 parts by mass of the positive electrode active material,
the positive electrode mixture layer has a material resistance Rm of 30 Ω·cm or less, and
a ratio Rm/Rc of the material resistance Rm (Ω·cm) of the positive electrode mixture layer relative to an interface resistance Rc (Ω·cm²) between the positive electrode current collector and the positive electrode mixture layer is 200 or more.

2. The positive electrode for a secondary battery of claim 1, wherein the conductive additive includes carbon nanotube.

3. The positive electrode for a secondary battery of claim 2, wherein the carbon nanotube has a fiber length of 1 µm or more.

4. The positive electrode for a secondary battery of any one of claims 1 to 3, wherein the ratio Rm/Rc is 500 or more.

5. The positive electrode for a secondary battery of any one of claims 1 to 3, wherein the lithium-containing composite oxide is a lithium-nickel composite oxide represented by a chemical formula LiₐNiₓM₁₋ₓO₂ (where 0 < a ≤ 1.2, 0.8 ≤ x ≤ 1, M is at least one selected from the group consisting of Co, Al, Mn, Fe, Ti, Sr, Na, Mg, Ca, Sc, Y, Cu, Zn, Cr, and B).

6. The positive electrode for a secondary battery of claim 5, wherein in the chemical formula, x≥0.85.

7. The positive electrode for a secondary battery of any one of claims 1 to 6, wherein the positive electrode mixture layer is provided on a surface of the positive electrode current collector by a loading amount of 250 g/m² or more.

8. A secondary battery comprising: the positive electrode for a secondary battery of any one of claims 1 to 7, and
a separator, a negative electrode facing the positive electrode for a secondary battery with the separator interposed therebetween, and an electrolyte.
